# EUROPEAN PATENT SPECIFICATION

(11) **EP 3 196 169 B1**
(45) Date of publication and mention of the grant of the patent: **28.10.2020**
(21) Application number: 15837976.8
(22) Date of filing: 29.05.2015
(51) Int. Cl.: C02F 1/56, B01D 17/05, B01D 21/01, C10G 33/04, C02F 103/36, C02F 103/10, C02F 101/32

(54) **METHOD AND AGENT FOR SEPARATING OIL/WATER EMULSION INTO OIL AND WATER**
VERFAHREN UND TRENNUNGSMITTEL ZUR TRENNUNG EINER ÖL/WASSER EMULSION IN ÖL UND WASSER UND ÖL
PROCÉDÉS ET AGENT DE SÉPARATION D'UNE ÉMULSION HUILE/EAU EN HUILE ET EN EAU

(30) Priority: 03.09.2014 JP 2014179225
(43) Date of publication of application: 26.07.2017
(73) Proprietor: Kurita Water Industries Ltd., Nakano-ku, Tokyo 164-0001 (JP)
(72) Inventor: KIKKAWA, Takashi, Tokyo 164-0001 (JP)
(74) Representative: TBK
(86) International application number: PCT/JP2015/065556
(87) International publication number: WO 2016/035400

(56) References cited:
- JP-A- S4 856 579
- JP-A- S5 027 765
- JP-A- 2004 066 116
- JP-A- 2007 038 177
- JP-A- 2007 526 123
- JP-A- 2011 131 164
- JP-A- 2013 255 923
- JP-A- 2014 079 686
- US-A- 5 098 605
- US-A- 5 098 605
- US-A- 6 153 656
- US-A1- 2004 014 824
- US-A1- 2005 194 323
- US-A1- 2009 305 925

## Description

### Field of Invention

The present invention relates to a method and an agent for efficiently separating water containing components originating from coal tar or crude oil, the water forming an o/w emulsion (oil-in-water emulsion), such as ammonia-containing wastewater from a coke oven of an ironworks or wastewater from an atmospheric distillation unit, an FCC unit, an RFCC unit, or a desalter of an oil refinery, into oil and water.

### Background of Invention

Patent Literature 1: JP H08-198619 A
Patent Literature 2: JP 2010-279877 A
Patent Literature 3: JP 2002-254072 A
Patent Literature 4: JP 2013-255923 A
Patent Literature 5: JP 2012-210613 A
Patent Literature 6: JP 2011-194306 A

In an ironworks, ammonia-containing water is sprayed onto a gas emitted from a coke oven in order to refine and cool the gas and recover the coal tar. Since the gas also contains water generated from coal carbonization, the amount of ammonia-containing water sprayed is gradually increased. The excess sprayed water (ammonia-containing wastewater) is passed into a wastewater treatment facility. The wastewater treatment facility for the ammonia-containing wastewater includes an ammonia stripper. Since the ammonia-containing wastewater is wastewater containing an oil component (coal tar) and forming an o/w emulsion, it is difficult to separate the oil component from water. When the content of the oil component in the wastewater is large, the oil component may adhere to the inside of the stripper and increase the pressure difference. As a result, consistent operation of the stripper may fail to be achieved.

Atmospheric distillation units, FCC (fluid catalytic cracking) units, RFCC (residual fluid catalytic cracking) units, and desalters of oil refineries also discharge wastewater containing an oil component originating from crude oil and forming an o/w emulsion. Thus, the above-described issues also occur in strippers at facilities for treating such wastewater. Specifically, when the oil component fails to be sufficiently separated from water in an oil-water separation tank disposed upstream of the stripper, the stripper may be contaminated with oil.

There has been proposed a method in which coal tar adhered to the inside of the stripper is removed by cleaning the stripper with a mixture of ammonia-containing water and coal tar (Patent Literature 1). In this method, it is difficult to perform cleaning during operation, and the degree of contamination may increase from when cleaning has been finished to when cleaning is performed again.

It is desirable to sufficiently remove the oil component from water at a position upstream of the stripper.

There have been proposed the following methods for separating wastewater containing the oil component (o/w emulsion) into oil and water. However, any of these methods has disadvantages.
1) A method in which an wastewater-treatment agent that is composed of an inorganic coagulant or that is primarily composed of an inorganic coagulant and includes a high-molecular coagulant is added to an o/w emulsion wastewater in order to form macroflocs and the macroflocs are removed from the wastewater. In this method, bentonite is further used (Patent Literature 3). It is not possible to coagulate emulsion particles to a sufficient degree by using only an inorganic coagulant or using only an inorganic coagulant and a high-molecular coagulant. This results in insufficient oil-water separation. In this method, bentonite is further added and used as cores of coagulation in order to promote the separation of oil. Bentonite is an inorganic substance and serves as impurities in the separated oil. Since the separated oil is intended to be reused, the mixing of an inorganic substance in the separated oil is unfavorable.
2) A method in which the oil component is removed by adsorption with an adsorbent, that is, specifically, a porous material such as activated carbon or activated coke (Patent Literature 2). In this method, the oil component may fail to be sufficiently removed when the concentration of the oil component is low. Thus, this method is not suitable for the removal of low-concentration oil components.

The phenolic resin used in the present invention is known as an agent used for coagulation treatment of water and wastewater from factories such as chemical factories, semiconductor factories, food factories, paper-pulp mills, printing factories, and automotive factories, wastewater from night-soil treatment plants and sewage treatment plants, such as biologically treated water, or as an agent used for treating water that circulates through a wet paint booth (e.g., see Patent Literatures 4 to 6). It is not known that the phenolic resin used in the present invention is capable of separating water containing components originating from coal tar or crude oil and forming an o/w emulsion, such as ammonia-containing wastewater from a coke oven of an ironworks or wastewater from an atmospheric distillation unit, an FCC unit, an RFCC unit, or a desalter of an oil refinery, into oil and water with great effect. US 5 098 605 A discloses a method for separating an o/w emulsion, including a component originating from crude oil, into oil and water wherein a phenolic resin is added to the emulsion by means of a vinyl-phenol.

The above methods proposed in the related art are not capable of efficiently separating an o/w emulsion into oil and water. As a result, oil droplets may adhere and deposit inside a wastewater stripper. This causes operational problems such as an increase in pressure difference and an increase in the load of wastewater treatment.

### Summary of Invention

An object of the present invention is to provide a method for efficiently separating water containing components originating from coal tar or crude oil and forming an o/w emulsion, such as ammonia-containing wastewater from a coke oven of an ironworks or wastewater from an atmospheric distillation unit, an FCC unit, an RFCC unit, or a desalter of an oil refinery, into oil and water and a treatment agent for the sufficient oil-water separation.

The inventor of the present invention found that it is possible to efficiently separate an o/w emulsion into oil wand water by adding a high-molecular compound including a phenolic hydroxyl group to the o/w emulsion and that it is preferable to further use a coagulant.

The present invention was made on the basis of the above findings and is defined by the technical teachings of claims 1 to 8.

### Advantageous Effects of Invention

According to the present invention, it is possible phenolic resin is added to the o/w emulsion.
[2] The method for separating an o/w emulsion into oil and water according to [1], wherein the phenolic resin and a coagulant are added to the o/w emulsion.
[3] The method for separating an o/w emulsion into oil and water according to [2], wherein the coagulant is an organic coagulant.
[4] The method for separating an o/w emulsion into oil and water according to any one of [1] to [3], wherein the o/w emulsion is ammonia-containing water.
[5] An agent for separating an o/w emulsion into oil and water, the o/w emulsion including a component originating from coal tar and/or crude oil, wherein the agent comprises a phenolic resin.
[6] The agent for separating an o/w emulsion into oil and water according to [5], the agent comprising the phenolic resin and a coagulant.
[7] The agent for separating an o/w emulsion into oil and water according to [6], wherein the coagulant is an organic coagulant.
[8] The agent for separating an o/w emulsion into oil and water according to any one of [5] to [7], wherein the o/w emulsion is ammonia-containing water.

### Advantageous Effects of Invention

According to the present invention, it is possible to efficiently separate water containing components originating from coal tar or crude oil and forming an o/w emulsion, such as ammonia-containing wastewater from a coke oven of an ironworks or wastewater from an atmospheric distillation unit, an FCC unit, an RFCC unit, or a desalter of an oil refinery, into oil and water in a short period of time to produce treated water in which the amount of oil component has been reduced.

When separated water produced by the oil-water separation according to the present invention is further treated in downstream facilities such as a stripper, it is possible to reduce the potential occurrence of problems in the facilities, such as contamination by the adhesion of oil components and an increase in the pressure difference which may occur due to the contamination. This makes it possible to achieve consistent operation for a prolonged period of time. Moreover, it is possible to reduce the frequency at which the facilities are cleaned. This increases operation efficiency and reduces operation costs.

Since a phenolic resin is not an inorganic substance, reusing separated oil components including the phenolic resin does not impose any problem.

Using a coagulant in combination with the phenolic resin further promotes the oil-water separation and reduces the amount of time required by the oil-water separation. In the case where an organic coagulant is used as a coagulant, all of the treatment chemicals used are organic chemicals. This eliminates the problems associated with the mixing of an inorganic substance in the separated oil component and enables the separated oil component to be efficiently reused. Description of Embodiments

Embodiments of the present invention are described below in detail.

### [O/W Emulsion]

The o/w emulsion that is to be treated in the present invention is an o/w emulsion including components originating from coal tar and/or crude oil. Specific examples of the o/w emulsion include ammonia-containing wastewater from a coke oven of an ironworks; ammonia-containing water including an oil component, such as ammonia-containing water used in a coke oven of an ironworks (e.g., ammonia-containing water taken from ammonia-containing-water-circulating line of a coke oven of an ironworks); and wastewater from an atmospheric distillation unit, an FCC unit, an RFCC unit, or a desalter of an oil refinery. In particular, ammonia-containing wastewater, that is, ammonia-containing wastewater recovered in the process in which ammonia-containing water is sprayed onto a gas emitted from a coke oven in order to refine and cool the gas, which is described above; ammonia-containing water in which an oil component has been mixed when the ammonia-containing water used for refining and cooling the gas, such as a circulating ammonia-containing water including ammonia-containing wastewater; and water containing such ammonia-containing water may be suitably separated into oil and water. The oil concentration in the ammonia-containing water that is to be separated into oil and water is generally about 0.001% to 0.5% by weight.

Using a phenolic resin enables such an o/w emulsion to be efficiently separated into oil and water. The oil content in the o/w emulsion that is to be treated is not limited. It is possible to efficiently separate o/w emulsions having various oil concentrations from high-concentration o/w emulsions having an oil concentration of about 10% to 60% by weight to low-concentration o/w emulsions having an oil concentration of about 1 to 1000 mg/L, into oil and water.

### [Phenolic Resin]

The phenolic resin (high-molecular compound including a phenolic hydroxyl group) include phenolic resins produced by condensation or modification of a phenol such as phenol, cresol, or xylenol with an aldehyde such as formaldehyde which have not been cured by crosslinking. Specific examples thereof include the product of condensation of phenol with formaldehyde, the product of condensation of cresol with formaldehyde, the product of condensation of xylenol with formaldehyde, alkyl-modified phenolic resins produced by alkylation of the above phenolic resins, polyvinylphenol, and phenolic resins including a substituent such as a polyoxyalkylene group. The phenolic resin may be a novolac or a resole. The weight-average molecular weight of the phenolic resin is 3000 or more and is preferably, for example, about 5000 to 100000. A phenolic resin having a small molecular weight may fail to achieve a good oil-water separation effect. A phenolic resin having an excessively large molecular weight may be unfavorable in terms of stability and ease of handling.

The above phenolic resins may be used alone or in combination of two or more.

Since phenolic resins are insoluble in water, the phenolic resin is preferably used in the form of a solution or an emulsion by being dissolved or dispersed in a solvent soluble in water. Examples of the solvent include watersoluble organic solvents such as ketones (e.g., acetone), esters (e.g., methyl acetate), and alcohols (e.g., methanol); aqueous alkaline solutions; and amines. It is preferable to use the phenolic resin by dissolving the phenolic resin in an aqueous alkaline solution such as an aqueous sodium hydroxide solution or an aqueous potassium hydroxide solution.

The concentrations of an alkali agent and the phenolic resin in the aqueous alkaline solution of the phenolic resin are preferably 1% to 25% by weight and 1% to 50% by weight, respectively.

The amount of phenolic resin used varies, for example, with the type of the phenolic resin used and the oil concentration in the o/w emulsion and depends on whether the coagulant described below is used in combination with the phenolic resin. The amount of the phenolic resin is normally 0.1 to 200 mg/L, is preferably 1 to 100 mg/L, and is particularly preferably 2 to 20 mg/L relative to the amount of the o/w emulsion in terms of the amount of active component (solid content of the resin). The amount of phenolic resin is normally 1% to 500% by weight and is preferably 10% to 200% by weight of the amount of oil component of the o/w emulsion. If the amount of phenolic resin used is smaller than the lower limit, a sufficiently large oil-water separation effect may fail to be achieved. Even if the amount of phenolic resin used is excessively large, it is not possible to further increase the oil-water separation effect in many cases. In addition, for example, foaming may occur.

After the phenolic resin has been added to the o/w emulsion, the o/w emulsion is stirred for a predetermined amount of time, that is, for example, about 1 second to 10 minutes, and subsequently left to stand. By the excellent oil-water separation action of the phenolic resin, the oil-water separation effect is achieved after the o/w emulsion has been left to stand for about 1 hour and a greater oil-water separation effect is achieved after the o/w emulsion has been left to stand for about 2 hour or more. It is preferable to leave the o/w emulsion to stand for 1 hour or more.

The treatment temperature is not limited. An o/w emulsion including a coal tar component having a low melting point, such as ammonia-containing wastewater, is preferably treated at about 30°C to 80°C. An o/w emulsion including an oil component originating from petroleum which is discharged from an oil refinery is preferably treated at about 20°C to 50°C.

The same applies to the temperature at which the treatment is performed using the coagulant described below.

The oil-water separation treatment using the phenolic resin may be performed in an oil-water separation tank. The phenolic resin may be added to the oil-water separation tank or line-injected to a pipe through which the o/w emulsion is fed to the oil-water separation tank. The oil-water separation tank is not necessarily a special tank and may be any tank in which an oil layer and a water layer can be separated from each other.

### [Coagulant]

Using a coagulant in addition to the phenolic resin enhances the oil-water separation effect. The coagulant may be an inorganic coagulant or an organic coagulant. Alternatively, an inorganic coagulant and an organic coagulant may be used in combination with each other.

Examples of the inorganic coagulant include aluminum coagulants such as polyaluminum chloride and aluminum sulfate; iron coagulants such as ferric chloride, ferrous sulfate, and polyferric sulfate; and polyvalent metal salt coagulants used in common water treatment. The above inorganic coagulants may be used alone or in combination of two or more.

The organic coagulant is preferably cationic. Examples of such organic coagulants include cationic organic high-molecular compounds such as poly(dimethyldiallylammonium chloride), an alkylamine-epichlorohydrin condensation product, polyethyleneimine, an alkylene dichloride-polyalkylene polyamine condensation product, poly(dimethylaminoethyl acrylate), poly(dimethylaminoethyl methacrylate), and polyvinylamidine. The above organic coagulants may be used alone or in combination of two or more.

Since the coagulant mixes in the separated oil together with the phenolic resin, it is desirable to use an organic coagulant instead of an inorganic coagulant in consideration of the reuse of the separated oil component.

The form in which the coagulant is used is not limited. The coagulant may be used in the form of an aqueous solution, a suspension, or an emulsion. It is preferable to use the coagulant in the form of an aqueous solution having a concentration of about 0.1% to 50% by weight.

The amount of coagulant used varies with, for example, the type of the coagulant used and the oil concentration in the o/w emulsion.

The amount of organic coagulant used is normally 0.05 to 150 mg/L, is preferably 0.25 to 75 mg/L, and is particularly preferably 0.5 to 15 mg/L relative to the amount of o/w emulsion. The amount of organic coagulant used is normally 1% to 200% by weight and is preferably 5% to 100% by weight of the amount of oil component of the o/w emulsion.

The amount of inorganic coagulant used is normally 10 to 1000 mg/L and is preferably 100 to 500 mg/L relative to the amount of o/w emulsion. The amount of inorganic coagulant used is normally 100% to 5000% by weight and is preferably 200% to 1000% by weight of the amount of oil component of the o/w emulsion.

The ratio between the amount of phenolic resin and the amount of organic coagulant is about 100:5 to 100 by weight and is particularly preferably about 100:30 to 80 by weight in terms of the amount of active components. The ratio between the amount of phenolic resin and the amount of inorganic coagulant is about 100:100 to 5000 by weight and is particularly preferably about 100:1000 to 3000 by weight in terms of the amount of active components.

If the amount of coagulant used is excessively small, the oil-water separating property may fail to be sufficiently increased by using the coagulant in combination with the phenolic resin. Using an excessive amount of coagulant does not increase the advantageous effect to a level appropriate to the amount of coagulant used and is unfavorable in terms of chemical costs and the mixing of the coagulant in the separated and recovered oil component.

Although the order in which the phenolic resin and the coagulant are added to the o/w emulsion is not limited, it is desirable to add the phenolic resin and the coagulant to the o/w emulsion simultaneously or add the coagulant to the o/w emulsion subsequent to the addition of the phenolic resin. It is particularly preferable to add the coagulant to the o/w emulsion subsequent to the addition of the phenolic resin. If the coagulant is added to the o/w emulsion prior to the addition of the phenolic resin, the reaction between the phenolic resin and the oil droplets included in the emulsion may be inhibited.

In the case where the phenolic resin and the coagulant are added to the o/w emulsion simultaneously, the coagulant may be added to the o/w emulsion in a predetermined amount together with the phenolic resin in the treatment in which the above-described phenolic resin is added to the o/w emulsion. The resulting mixture is stirred and subsequently left to stand.

In the case where the coagulant is added to the o/w emulsion subsequent to the addition of the phenolic resin, first, the phenolic resin is added to the o/w emulsion under the above-described conditions. After the resulting mixture has been stirred, a predetermined amount of coagulant is added to the mixture. The mixture is stirred for about 1 second to 10 minutes and subsequently left to stand. This treatment may be performed in a batch process with a single oil-water separation tank. This treatment may also be performed in a sequential process with a tank in which treatment is performed using the phenolic resin and another tank in which treatment is performed using the coagulant which is disposed downstream of the above tank. In this case, the o/w emulsion is introduced to the upstream treatment tank. The phenolic resin is added to the tank. After stirring has been performed for a predetermined amount of time, the resulting treated water is fed to the downstream oil-water separation tank. The coagulant is added to the downstream oil-water separation tank. The resulting mixture is stirred for a predetermined amount of time and subsequently left to stand. The phenolic resin and the coagulant may be each added to the treatment tank or line-injected to a pipe through which the o/w emulsion is fed.

Using the coagulant in combination with the phenolic resin promotes the oil-water separation and reduces the amount of time required by the oil-water separation. This markedly reduces the amount of time during which the water is left to stand. As a result, a sufficient oil-water separation effect may be achieved even when the water is left to stand for about five minutes only. It is preferable to leave the water to stand for five minutes or more when the phenolic resin and the coagulant are used in combination with each other.

### [Agent for Separating O/W Emulsion into Oil and Water]

The agent for separating an o/w emulsion into oil and water according to the present invention includes a phenolic resin or, in another case, a phenolic resin and a coagulant. The agent for separating an o/w emulsion into oil and water which includes a phenolic resin is preferably used in the form of an aqueous alkaline solution as described above.

The agent for separating an o/w emulsion into oil and water according to the present invention which includes a phenolic resin and a coagulant, which is preferably an organic coagulant, may be prepared by mixing the phenolic resin and the coagulant together. Alternatively, the phenolic resin and the coagulant may be fed to the o/w emulsion at different timings. The agent for separating an o/w emulsion into oil and water according to the present invention, which includes a phenolic resin and a coagulant, preferably includes the phenolic resin and the coagulant such that the preferable proportions of the phenolic resin and the coagulant described above are achieved.

### EXAMPLES

The present invention is described below in further detail with reference to Examples and Comparative examples.

### [O/W Emulsion to Be Treated]

The o/w emulsions treated in Examples and Comparative examples were ammonia-containing wastewater taken at an outlet of a coal tar decanter of a coke oven at an ironworks (oil concentration: about 100 mg/L, hereinafter, referred to as "ammonia-containing wastewater") and wastewater discharged from an FCC unit and fed to a stripper at an oil refinery (oil concentration: about 50 mg/L, hereinafter, referred to as "stripper feedwater discharged from FCC").

### [Treatment Chemicals]

The following treatment chemicals were used.

### <Phenolic Resin>

Phenolic resin 1: Polyvinylphenol (weight-average molecular weight: 9200)
Phenolic resin 2: Phenol-formaldehyde condensation product prepared by the production method described in JP 2013-255923 A (weight-average molecular weight: 7500)

The above phenolic resins were used in the form of a 3-weight% aqueous sodium hydroxide solution.

### <Organic Coagulant>

Organic coagulant 1: Dimethylamine-epichlorohydrin condensation product (weight-average molecular weight: 0.1 million)

### <Inorganic Coagulant>

Inorganic coagulant 1: 18-Weight% aqueous aluminum sulfate solution

### <Low-Molecular-Weight Polymer>

Low-molecular-weight polymer 1: Sodium polyacrylate
(weight-average molecular weight: 6000)

### <Surfactants>

Surfactant 1: Polyoxyethylene alkyl ether (HLB8.0, "SANNONIC SS-30" produced by Sanyo Chemical Industries, Ltd.)
Surfactant 2: Polyoxyethylene alkyl ether (HLB13.2, "SANNONIC SS-90" produced by Sanyo Chemical Industries, Ltd.)
Surfactant 3: Polyoxyethylene polyoxypropylene block polymer ("NEWPOL PE-62" produced by Sanyo Chemical Industries, Ltd.)
Surfactant 4: Polyoxyethylene polyoxypropylene block polymer ("NEWPOL PE-68" produced by Sanyo Chemical Industries, Ltd.)
Surfactant 5: Sodium alkyl diphenyl ether disulfonate ("SANDET ALH" produced by Sanyo Chemical Industries, Ltd.)

### [Testing Method]

The oil-water separating property was determined by the following method.
(1) An aliquot of the o/w emulsion that was to be tested was charged into a 100-ml colorimetric tube. The colorimetric tube was left to stand for 30 minutes in a thermostat. The temperature of the thermostat was set to 70°C when the ammonia-containing wastewater was tested and 30°C when the stripper feedwater discharged from FCC was tested.
(2) A treatment chemical (Treatment chemical 1) was added to the colorimetric tube at a predetermined concentration, and stirring was performed for ten seconds.
(3) In the case where two types of treatment chemicals were used, another treatment chemical (Treatment chemical 2) was added to the colorimetric tube at a predetermined concentration, and stirring was performed for ten seconds.
(4) Subsequently, the colorimetric tube was left to stand for a predetermined amount of time (this time is referred to as "testing time") in a thermostat. The temperature of the thermostat was set to 70°C when the ammonia-containing wastewater was tested and 30°C when the stripper feedwater discharged from FCC was tested.
(5) After the lapse of the predetermined amount of time, a water sample was taken from the intermediate layer with a dropper, and the turbidity of the water sample was measured.

The turbidimeter used was a turbidimeter 2100P produced by HACH.

The lower the turbidity, the greater the oil-water separating property. The smaller the amount of testing time, the greater the oil-water separating property.

### [Reference Examples I-1 to 1-4, Examples 1-5 and 1-6 and Comparative Examples I-1 to 1-11]

A specific one of the treatment chemicals (Treatment chemicals 1 and 2) shown in Table 1 was added to the ammonia-containing wastewater at the corresponding one of the concentrations shown in Table 1 (any treatment chemical was not used in Comparative example I-1). The test was conducted for the corresponding one of the testing times shown in Table 1 in accordance with the above testing method.

Table 1 shows the results of measurement of turbidity.

### [Reference Examples II-1 to II-4, Examples II-5 and II-6 and Comparative Examples II-1 to II-11]

A specific one of the treatment chemicals (Treatment chemicals 1 and 2) shown in Table 2 was added to the stripper feedwater discharged from FCC at the corresponding one of the concentrations shown in Table 2 (any treatment chemical was not used in Comparative example II-1). The test was conducted for the corresponding one of the testing times shown in Table 2 in accordance with the above testing method.

Table 2 shows the results of measurement of turbidity.

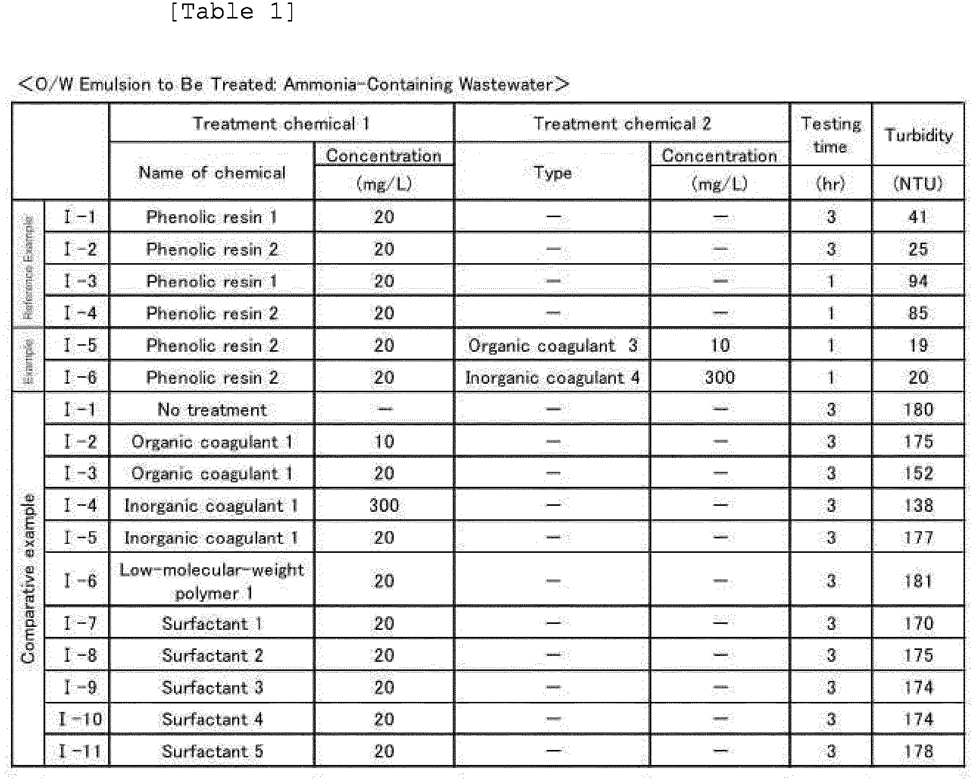

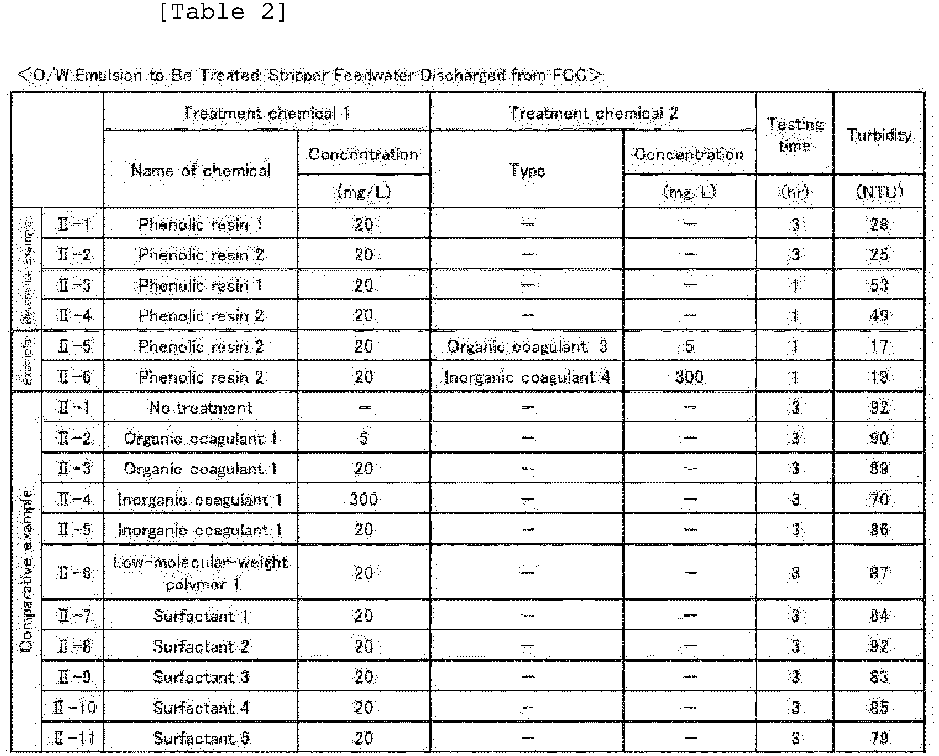

As is clear from the results shown Tables 1 and 2, it is possible to efficiently separate both of the o/w emulsions into oil and water by adding the phenolic resin to the o/w emulsions. Using the phenolic resin in combination with the organic coagulant or the inorganic coagulant further enhances the oil-water separating property compared with the case where only the phenolic resin is used. Using the phenolic resin in combination with the organic coagulant particularly enhances the oil-water separating property.

In Examples 1-5 and 1-6 and Examples II-5 and II-6, where the phenolic resin was used in combination with the organic coagulant or the inorganic coagulant, the oil-water separation was performed at a markedly high rate, and the degree of oil-water separation was high in appearance even after the lapse of about 5 to 10 minutes from the start of the test.

## Claims

1. A method for separating an o/w emulsion into oil and water, the o/w emulsion including a component originating from coal tar and/or crude oil, wherein a phenolic resin and a coagulant are added to the o/w emulsion and wherein the phenolic resin is produced by condensation or modification of a phenol with an aldehyde which has not been cured by crosslinking and has a weight-average molecular weight of 3000 or more,
wherein the coagulant is an organic coagulant or an inorganic coagulant,
wherein the ratio between the amount of phenolic resin and the amount of organic coagulant is 100:5 to 100 by weight in terms of the amount of active components, and
wherein the ratio between the amount of phenolic resin and the amount of inorganic coagulant is 100:100 to 5000 by weight in terms of the amount of active components.

2. The method for separating an o/w emulsion into oil and water according to Claim 1, wherein a continuous phase of the o/w emulsion is ammonia-containing water.

3. The method for separating an o/w emulsion into oil and water according to Claim 1 or 2, wherein the phenol is selected from phenol, cresol or xylene.

4. The method for separating an o/w emulsion into oil and water according to any one of Claims 1 to 3, wherein the aldehyde is formaldehyde.

5. An agent for separating an o/w emulsion into oil and water, the o/w emulsion including a component originating from coal tar and/or crude oil, wherein the agent comprises a phenolic resin and a coagulant and wherein the phenolic resin is produced by condensation or modification of a phenol with an aldehyde which has not been cured by crosslinking and has a weight-average molecular weight of 3000 or more,
wherein the coagulant is an organic coagulant or an inorganic coagulant,
wherein the ratio between the amount of phenolic resin and the amount of organic coagulant is 100:5 to 100 by weight in terms of the amount of active components, and
wherein the ratio between the amount of phenolic resin and the amount of inorganic coagulant is 100:100 to 5000 by weight in terms of the amount of active components.

6. The agent for separating an o/w emulsion into oil and water according to Claim 5, wherein a continuous phase of the o/w emulsion is ammonia-containing water.

7. The agent for separating an o/w emulsion into oil and water according to Claim 5 or 6, wherein the phenol is selected from phenol, cresol or xylene.

8. The agent for separating an o/w emulsion into oil and water according to any one of Claims 5 to 7, wherein the aldehyde is formaldehyde.

## Patentansprüche

1. Verfahren zum Trennen einer o/w-Emulsion in Öl und Wasser, bei dem die o/w-Emulsion eine von Kohlenteer und/oder Rohöl stammende Komponente beinhaltet, wobei ein Phenolharz und ein Koagulationsmittel zu der o/w-Emulsion gegeben werden und wobei das Phenolharz, welches nicht durch Vernetzen gehärtet worden ist und ein gewichtsgemitteltes Molekulargewicht von 3000 oder mehr aufweist, durch Kondensation oder Modifikation eines Phenols mit einem Aldehyd hergestellt ist,
wobei das Koagulationsmittel ein organisches Koagulationsmittel oder ein anorganisches Koagulationsmittel ist,
wobei das Verhältnis zwischen der Menge an Phenolharz und der Menge an organischem Koagulationsmittel 100:5 bis 100 pro Gewichtseinheit hinsichtlich der Menge an aktiven Komponenten ist, und
wobei das Verhältnis zwischen der Menge an Phenolharz und der Menge an anorganischem Koagulationsmittel 100:100 bis 5000 pro Gewichtseinheit hinsichtlich der Menge an aktiven Komponenten ist.

2. Verfahren zum Trennen einer o/w-Emulsion in Öl und Wasser gemäß Anspruch 1, wobei eine kontinuierliche Phase der o/w-Emulsion Ammoniak enthaltendes Wasser ist.

3. Verfahren zum Trennen einer o/w-Emulsion in Öl und Wasser gemäß Anspruch 1 oder 2, wobei das Phenol ausgewählt wird aus Phenol, Kresol oder Xylol.

4. Verfahren zum Trennen einer o/w-Emulsion in Öl und Wasser gemäß einem der Ansprüche 1 bis 3, wobei das Aldehyd Formaldehyd ist.

5. Mittel zum Trennen einer o/w-Emulsion in Öl und Wasser, bei dem die o/w-Emulsion eine von Kohlenteer und/oder Rohöl stammende Komponente beinhaltet, wobei das Mittel ein Phenolharz und ein Koagulationsmittel umfasst und wobei das Phenolharz, welches nicht durch Vernetzen gehärtet worden ist und ein gewichtsgemitteltes Molekulargewicht von 3000 oder mehr aufweist, durch Kondensation oder Modifikation eines Phenols mit einem Aldehyd hergestellt ist,
wobei das Koagulationsmittel ein organisches Koagulationsmittel oder ein anorganisches Koagulationsmittel ist,
wobei das Verhältnis zwischen der Menge an Phenolharz und der Menge an organischem Koagulationsmittel 100:5 bis 100 pro Gewichtseinheit hinsichtlich der Menge an aktiven Komponenten ist, und
wobei das Verhältnis zwischen der Menge an Phenolharz und der Menge an anorganischem Koagulationsmittel 100:100 bis 5000 pro Gewichtseinheit hinsichtlich der Menge an aktiven Komponenten ist.

6. Mittel zum Trennen einer o/w-Emulsion in Öl und Wasser gemäß Anspruch 5, wobei eine kontinuierliche Phase der o/w-Emulsion Ammoniak enthaltendes Wasser ist.

7. Mittel zum Trennen einer o/w-Emulsion in Öl und Wasser gemäß Anspruch 5 oder 6, wobei das Phenol ausgewählt wird aus Phenol, Kresol oder Xylol.

8. Mittel zum Trennen einer o/w-Emulsion in Öl und Wasser gemäß einem der Ansprüche 5 bis 7, wobei das Aldehyd Formaldehyd ist.

## Revendications

1. Procédé pour séparer une émulsion huile/eau en huile et eau, l'émulsion huile/eau comprenant un composant issu de goudron de houille et/ou de pétrole brut, dans lequel une résine phénolique et un coagulant sont ajoutés à l'émulsion huile/eau et dans lequel la résine phénolique est produite par condensation ou modification d'un phénol avec un aldéhyde qui n'a pas encore été durci par réticulation et qui a une masse moléculaire moyenne en masse de 3000 ou plus,
dans lequel le coagulant est un coagulant organique ou un coagulant inorganique,
dans lequel le rapport entre la quantité de résine phénolique et la quantité de coagulant organique est de 100/5 à 100 en poids en termes de la quantité de composants actifs, et
dans lequel le rapport entre la quantité de résine phénolique et la quantité de coagulant inorganique est de 100/100 à 5000 en poids en termes de la quantité de composants actifs.

2. Procédé pour séparer une émulsion huile/eau en huile et eau selon la revendication 1, dans lequel une phase continue de l'émulsion huile/eau est de l'eau ammoniaquée.

3. Procédé pour séparer une émulsion huile/eau en huile et eau selon la revendication 1 ou 2, dans lequel le phénol est choisi parmi le phénol, le crésol et le xylène.

4. Procédé pour séparer une émulsion huile/eau en huile et eau selon l'une quelconque des revendications 1 à 3, dans lequel l'aldéhyde est le formaldéhyde.

5. Agent pour séparer une émulsion huile/eau en huile et eau, l'émulsion huile/eau comprenant un composant issu de goudron de houille et/ou de pétrole brut, lequel agent comprend une résine phénolique et un coagulant, dans lequel la résine phénolique est produite par condensation ou modification d'un phénol avec un aldéhyde qui n'a pas encore été durci par réticulation et qui a une masse moléculaire moyenne en masse de 3000 ou plus,
dans lequel le coagulant est un coagulant organique ou un coagulant inorganique,
dans lequel le rapport entre la quantité de résine phénolique et la quantité de coagulant organique est de 100/5 à 100 en poids en termes de la quantité de composants actifs, et
dans lequel le rapport entre la quantité de résine phénolique et la quantité de coagulant inorganique est de 100/100 à 5000 en poids en termes de la quantité de composants actifs.

6. Agent pour séparer une émulsion huile/eau en huile et eau selon la revendication 5, dans lequel une phase continue de l'émulsion huile/eau est de l'eau ammoniaquée.

7. Agent pour séparer une émulsion huile/eau en huile et eau selon la revendication 5 ou 6, dans lequel le phénol est choisi parmi le phénol, le crésol et le xylène.

8. Agent pour séparer une émulsion huile/eau en huile et eau selon l'une quelconque des revendications 5 à 7, dans lequel l'aldéhyde est le formaldéhyde.
